# FASCICULE DE BREVET EUROPEEN

(11) **EP 1 523 404 B1**
(45) Date de publication et mention de la délivrance du brevet: **02.06.2010**
(21) Numéro de dépôt: 03750815.7
(22) Date de dépôt: 17.07.2003
(51) Int. Cl.: B29C 51/44, B29C 51/34, B29C 51/26

(54) **DISPOSITIF ET PROCEDE POUR LE THERMOFORMAGE D'UN OBJET PRESENTANT UNE PORTION EN CONTRE-DEPOUILLE**
VERFAHREN UND VORRICHTUNG ZUM WARMUMFORMEN VON EINEM GEGENSTAND DER EINE HINTERSCHNEIDUNG AUFWEIST
DEVICE AND METHOD FOR THERMOFORMING AN OBJECT HAVING A BACK DRAFT PORTION

(30) Priorité: 19.07.2002 FR 0209186
(43) Date de publication de la demande: 20.04.2005
(73) Titulaire: ERCA FORMSEAL, 91940 Les Ulis (FR)
(72) Inventeur: SCHWAB, Dominique, F-78000 Versailles (FR); COOPER, Timothy, F-94240 L'Haye les Roses (FR)
(74) Mandataire: Intes, Didier Gérard André
(86) Numéro de dépôt international: PCT/FR2003/002257
(87) Numéro de publication internationale: WO 2004/009333

(56) Documents cités:
- EP-A- 1 063 077
- FR-A- 1 554 475

## Description

La présente invention concerne un dispositif pour le thermoformage d'un objet présentant une portion en contre-dépouille et une portion de fond, le dispositif comprenant un moule de thermoformage ayant au moins deux parties de contre-dépouille voisines d'une extrémité ouverte et une partie de fond, un contre-moule ayant une extrémité apte à coopérer avec ladite extrémité du moule pour pincer contre cette dernière une pièce de matériau thermoplastique et définir, avec lesdites parties du moule, une cavité de thermoformage, et un piston de thermoformage, mobile entre une position active de thermoformage dans laquelle il pénètre dans ladite cavité et une position inactive dans laquelle il se trouve en dehors de cette cavité, les deux parties de contre-dépouille du moule étant susceptibles d'être écartées l'une de l'autre pour permettre le démoulage de l'objet.

Dans l'objet devant être thermoformé par le dispositif de l'invention, la portion en contre-dépouille présente des dimensions diamétrales inférieures à celles de la portion de fond. Il s'agit par exemple d'un récipient en forme de bouteille, dont le col forme la portion en contre-dépouille. Il peut également s'agir d'un récipient ayant une paroi latérale sensiblement tronconique, dont la paroi converge vers l'ouverture, ou encore d'un récipient dont la forme correspond à celle obtenue à partir d'une sphère, découpée selon un plan parallèle à son équateur, ce dernier se trouvant entre l'ouverture ainsi formée et le fond du récipient.

Lors du thermoformage d'objets exempts de contre-dépouille, le démoulage est réalisé très simplement en éloignant le moule de l'ouverture de l'objet par un mouvement de translation parallèle au déplacement du piston de thermoformage. S'agissant du thermoformage d'objets présentant une contre-dépouille, le démoulage est plus compliqué et nécessite l'utilisation d'un moule en plusieurs parties.

FR-2 795 360 décrit un dispositif selon le préambule de la revendication 1. Plus précisément, FR-2 795 360 préconise d'utiliser un moule ayant deux parties de contre-dépouille et une partie de fond. Pour le démoulage, les deux parties de contre-dépouille sont d'abord écartées l'une de l'autre, et l'objet thermoformé est maintenu contre la partie de fond du moule par aspiration, cette partie de fond étant munie de conduits d'aspiration. Cette partie de fond peut alors être déplacée pour dégager l'objet de la zone dans laquelle se trouvent les parties de contre-dépouille du moule, afin de le rendre accessible par un moyen de préhension qui permet de transférer cet objet vers la sortie du dispositif.

Ce dispositif connu est relativement compliqué car il met en oeuvre un maintien de l'objet par aspiration contre le fond du moule. L'efficacité de cette aspiration doit être parfaitement assurée pour permettre un maintien correct de l'objet lors du déplacement de la partie de fond du moule.

En particulier, pour.éviter les risques de basculement de l'objet par rapport à cette partie de fond, il est nécessaire que celle-ci recouvre la portion de fond de l'objet sur une hauteur suffisante. Lorsque la partie de fond du moule, portant l'objet, a été suffisamment éloignée des parties de contre-dépouille du moule, il faut faire cesser l'aspiration et réaliser une séparation de l'objet par rapport à ladite partie de fond. Ceci impose d'opérer un déplacement relatif de l'objet et de la partie de fond du moule parallèlement au sens de déplacement du piston de thermoformage, pour dégager la portion de fond de l'objet de la partie de fond du moule, puis de transférer l'objet latéralement en l'écartant de l'outil de thermoformage.

Ainsi, la cinématique du déplacement des différentes pièces est relativement complexe et, si l'on considère que le sens de déplacement du piston de thermoformage est vertical, l'opération de démoulage nécessite d'abord un déplacement horizontal des parties de contre-dépouille du moule pour qu'elles s'écartent de la portion de contre-dépouille de l'objet, puis un premier déplacement vertical de la partie de fond du moule sur une course suffisante pour éloigner le rebord de l'objet des parties de contre-dépouille du moule, et un deuxième déplacement vertical de cette partie de fond, ou bien un déplacement vertical de l'objet par rapport à cette partie de fond, sur une course suffisante pour démouler la portion de fond de l'objet par rapport à la partie de fond du moule, et enfin un transfert horizontal de l'objet. A ceci s'ajoute le fait que, en général, l'ensemble du moule (comprenant les parties de contre-dépouille) doit pouvoir être déplacé sur une faible course verticale pour venir pincer la matière thermoplastique entre le moule et le contre-moule.

FR-1 427 784 divulgue un autre dispositif dans lequel, pour le démoulage d'un objet présentant une portion en contre-dépouille, les parties de contre-dépouille du moule sont d'abord écartées l'une de l'autre, et l'objet est expulsé de la partie de fond du moule par un piston éjecteur dont la tête forme le fond du moule lors du thermoformage. Lors de cette expulsion, l'objet est simplement porté par la tête du piston sans être maintenu par rapport à elle et il existe un risque qu'il bascule ou chute, ce qui conduit à des pertes, ou au moins à des réductions de cadence de fabrication. De plus, le dispositif de FR-1 427 784 n'est possible que lorsque le moule et le contre-moule constituent respectivement l'outil inférieur et l'outil supérieur du dispositif de thermoformage. En d'autres termes, l'objet est nécessairement thermoformé vers le bas.

FR-2 256 818 divulgue encore un autre dispositif dans lequel, après le thermoformage d'un objet à partir d'une bande thermoplastique, une partie avant du moule, qui ferme ce dernier du côté aval dans le sens d'avancement de la bande, est écartée afin que la bande puisse avancer d'un pas en extrayant du moule l'objet qui vient d'être thermoformé par l'ouverture libérée du fait de l'ouverture de l'avant du moule. Ce dispositif ne peut être utilisé que pour le thermoformage d'objets dans une bande continue de matériau thermoplastique.

L'invention a pour but de proposer un dispositif pour le thermoformage d'objets présentant une portion en contre-dépouille améliorant l'art antérieur précité.

Ce but est atteint grâce au dispositif selon la revendication 1.

Durant la première phase de la séquence, dans laquelle les parties de contre-dépouille du moule sont écartées, l'objet qui vient d'être thermoformé continue d'être maintenu entre le contre-moule et la partie de fond du moule. L'écartement des parties de contre-dépouille du moule rend accessible une partie de la paroi de l'objet, par exemple un rebord ou une portion saillante que présente cet objet, celui-ci peut donc être maintenu par rapport au contre-moule par les moyens de maintien. Dans cette situation, l'objet peut être totalement démoulé par le déplacement de la partie de fond du moule par rapport au contre-moule. Il peut ensuite être saisi par des moyens de préhension pour être sorti du dispositif de thermoformage, en étant par exemple disposé dans une station suivante, par exemple une station de remplissage, d'une installation comprenant ce dispositif.

La cinématique du déplacement des différentes parties du moule lors du thermoformage est extrêmement simple et peut être exécutée rapidement. Il n'est pas nécessaire de déplacer l'objet par rapport au contre-moule lors de son démoulage, et l'objet peut être parfaitement maintenu contre ce contre-moule sans les risques de basculement qui existeraient avec les dispositifs de FR-2 795 360 et FR-1 427 784. En particulier, pour le démoulage, on peut ne déplacer que les parties du moule, sans avoir aucunement besoin de déplacer l'objet qui vient d'être thermoformé.

L'invention s'applique aussi bien à un dispositif dans lequel le moule constitue l'outil inférieur de thermoformage qu'à un dispositif dans lequel le moule constitue l'outil supérieur. De plus, le dispositif de l'invention s'applique au thermoformage d'objets à partir de pièces thermoplastiques distinctes (une pièce par objet) par exemple constituées par des pastilles de matériau thermoplastique.

Avantageusement, les parties de contre-dépouille du moule sont solidaires du déplacement de la partie de fond du moule.

Les différentes parties du moule sont alors reliées entre elles de telle sorte que les parties de contre-dépouille puissent être écartées sans déplacer la partie de fond du moule, et de telle sorte que le déplacement final de cette partie de fond pour l'éloigner de l'objet maintenu contre l'extrémité du contre-moule permette un démoulage complet, la partie de fond du moule entraînant avec elle les parties de contre-dépouille. Ceci facilite également l'opération de fermeture du moule avant le thermoformage d'un nouvel objet, car, pour cela, les deux parties de contre-dépouille peuvent être rapprochées l'une de l'autre pour définir un contour intérieur fermé, une pièce de matériau thermoplastique peut être disposée sur l'extrémité du contre-moule ou sur l'extrémité du moule, et cette pièce peut être pincée entre le contre-moule et le moule par le déplacement vertical de l'ensemble du moule vers le contre-moule.

Avantageusement, le moule et le contre-moule sont aptes à être déplacés l'un par rapport à l'autre pour placer leurs extrémités respectives hors de contact avant l'écartement des deux parties de contre-dépouille du moule.

Ce déplacement peut s'opérer sur une faible course, par exemple de l'ordre de quelques dizaines de millimètres à 1 ou 2 millimètres. Il permet d'opérer l'écartement des parties de contre-dépouille du moule sans frottement de ces dernières sur l'extrémité du contre-moule.

Avantageusement, les moyens de maintien comprennent des organes de maintien aptes à être déplacés entre une position active dans laquelle ils sont aptes à maintenir l'objet par rapport au contre-moule et une position inactive.

Selon un mode de réalisation pour le démoulage de l'objet, lesdites parties du moule et les moyens de maintien sont aptes à être commandés selon une séquence dans laquelle, successivement, les parties de contre-dépouille du moule sont écartées, les moyens de maintien passent d'une position inactive à une position active dans laquelle ils maintiennent l'objet par rapport au contre-moule, et la partie de fond du moule est éloignée du contre-moule.

Dans ce cas, les moyens de maintien sont inactifs pendant le thermoformage et ne passent dans leur position active qu'après ce thermoformage, en étant par exemple déplacés dans le plan de joint entre les parties de contre-dépouille du moule, plan de joint qui est alors ouvert.

Selon un autre mode de réalisation, les moyens de maintien sont aptes à occuper une position inactive et une position active dans laquelle ils délimitent une partie de la paroi de la cavité de thermoformage et dans laquelle ils sont aptes à maintenir l'objet par rapport au contre-moule, et lesdits moyens de maintien sont aptes à occuper leur position active pendant le thermoformage de l'objet et pendant l'écartement des parties de contre-dépouille du moule.

Dans ce cas, les moyens de maintien contribuent à donner sa forme à la paroi de l'objet et, tant qu'ils occupent leur position active, ils maintiennent parfaitement cet objet par complémentarité de forme.

L'invention concerne également un procédé de thermoformage d'un objet présentant une portion en contre-dépouille et une portion de fond, dans lequel on utilise un moule de thermoformage ayant au moins deux parties de contre-dépouille voisines d'une extrémité ouverte et une partie de fond, on pince une pièce de matériau thermoplastique à l'aide de l'extrémité d'un contre-moule contre ladite extrémité du moule et on définit une cavité de thermoformage avec lesdites parties du moule, on amène un piston de thermoformage dans une position active de thermoformage dans laquelle il pénètre dans la cavité du moule à partir d'une position inactive dans laquelle ledit piston se trouve en dehors de ladite cavité et, pour permettre le démoulage de l'objet, on écarte l'une de l'autre lesdites parties de contre-dépouille du moule.

FR-2 795 360 décrit un procédé selon le préambule de la revendication 13. Il s'agit plus précisément d'un procédé dans lequel, après avoir écarté les parties de contre-dépouille du moule, on maintient l'objet qui vient d'être thermoformé contre la partie de fond du moule par aspiration et l'on déplace cette partie de fond avec l'objet qu'elle porte. Le maintien est relativement peu fiable et il existe un risque de chute ou de basculement de l'objet lors du déplacement de la partie de fond du moule. De plus, ce déplacement doit être suivi d'une opération de démoulage de l'objet par rapport à cette partie de fond.

FR-1 427 784 divulgue un procédé dans lequel, après l'écartement des parties de contre-dépouille, on expulse l'objet à l'aide d'un piston éjecteur. Comme indiqué précédemment, cette expulsion risque également de causer la chute ou le basculement de l'objet. De plus, cet objet ne peut être thermoformé que vers le bas.

FR-2 256 818 décrit un procédé dans lequel, après avoir ouvert l'avant du moule, on fait avancer la bande thermoplastique portant l'objet qui vient d'être thermoformé pour démouler ce dernier. Ce procédé ne s'applique évidemment qu'à des objets thermoformés dans une bande continue.

L'invention a pour but de proposer un procédé améliorant ceux de l'art antérieur précité.

Ce but est atteint grâce au procédé selon la revendication 13.

Avantageusement, alors qu'on maintient l'objet par rapport au contre-moule, on éloigne les parties de contre-dépouille et la partie de fond du moule par rapport au contre-moule.

Avantageusement, avant d'écarter l'une de l'autre les deux parties de contre-dépouille du moule, on déplace l'un par rapport à l'autre le moule et le contre-moule pour placer leurs extrémités respectives hors de contact.

Avantageusement, pour maintenir l'objet par rapport au contre-moule, on déplace des organes de maintien d'une position inactive à une position active.

Selon un mode de réalisation, on effectue ce déplacement après avoir écarté l'une de l'autre les parties de contre-dépouille du moule.

Selon un autre mode de réalisation, on effectue ce déplacement avant de thermoformer l'objet et on ramène lesdits organes de maintien dans leur position inactive après avoir écarté l'une de l'autre les parties de contre-dépouille du moule.

Dans ce cas, avantageusement, on thermoforme l'objet à partir d'une pastille de matériau thermoplastique et, avant de thermoformer ledit objet, on conforme le pourtour de ladite pastille à l'aide des organes de maintien.

La pastille parvient dans le dispositif de thermoformage après avoir été chauffée et transportée, ce qui a pu modifier sa forme. La conformation rectifie donc le pourtour de la pastille avant le thermoformage. Elle est avantageusement réalisée par le passage des organes de maintien de leur position inactive à leur position active et est avantageusement accompagnée ou suivie par un matriçage du bord de la pastille.

L'invention sera bien comprise et ses avantages apparaîtront mieux à la description détaillée qui suit, de modes de réalisation représentés à titre d'exemples non limitatifs. La description se réfère aux dessins annexés sur lesquels :
- les figures 1, 3 et 5 sont des coupes verticales analogues montrant un dispositif selon un premier mode de réalisation de l'invention dans trois états successifs, après le thermoformage d'un objet dans le moule ;
- les figures 2, 4 et 6 sont des coupes, respectivement selon la ligne II-II de la figure 1, selon la ligne IV-IV de la figure 3 et selon la ligne VI-VI de la figure 5 ;
- la figure 7 est une vue en élévation d'un système utilisant deux dispositifs selon le premier mode de réalisation de l'invention ;
- la figure 8 montre, en perspective, la partie basse de ce système qui comporte les deux contre-outils de thermoformage ;
- la figure 9 montre, en perspective, la partie haute de ce système qui comporte deux moules de thermoformage ;
- la figure 10 montre, selon une vue partielle en perspective, la partie basse d'un dispositif selon un deuxième mode de réalisation de l'invention ; et
- les figures 11, 12 et 13 sont des coupes verticales analogues montrant schématiquement et partiellement, dans trois états successifs préalables au thermoformage d'un objet dans le moule, un dispositif selon un deuxième mode de réalisation de l'invention.

Le dispositif représenté sur les figures sert à thermoformer un objet 10 qui, dans l'exemple représenté, a la forme d'une petite bouteille. Il présente en effet un rebord 10A, une portion de col 10B en contre-dépouille et une portion de fond 10C. Comme indiqué sur le dessin, on voit que cet objet présente éventuellement en outre une nervure annulaire formant une collerette 10D entre le rebord 10A et le col 10B. Cette collerette peut par exemple coopérer avec une ceinture d'inviolabilité du bouchon du récipient.

Le dispositif comprend un moule de thermoformage 12 qui a deux parties de contre-dépouille, respectivement 12A et 12B dont les bords libres définissent l'extrémité ouverte 12' du moule. Ce dernier comprend également une partie de fond 13 qui, dans l'exemple représenté, est formée par plusieurs pièces comprenant une pièce 13A dont la périphérie interne est cylindrique, une partie de fond proprement dite 13B, une partie de carter 13C disposée autour de cette partie 13B et solidaire avec elle, et une bague 13D par l'intermédiaire de laquelle les pièces 13C et 13A sont rendues solidaires.

En l'espèce, la partie de fond 13B est refroidie par circulation de fluide dans les conduits de refroidissement 14 qu'elle comporte.

De manière générale, quel que soit le nombre des pièces qui constituent le moule, on distingue dans ce dernier au moins deux parties de contre-dépouille et une partie de fond.

Le dispositif comprend également un contre-moule 18 ayant une extrémité 18' qui est apte à coopérer avec l'extrémité 12' du moule pour pincer contre cette dernière une pièce de matériau thermoplastique et un piston de thermoformage 20, mobile entre une position active de thermoformage (non représentée) dans laquelle il pénètre dans la cavité 16 et une position inactive (représentée) dans laquelle il se trouve en dehors de cette cavité.

Les différentes parties du moule définissent, considérées ensemble et avec le contre-moule 18, une cavité de thermoformage 16.

Dans l'exemple représenté, l'objet est thermoformé vers le haut, c'est-à-dire que le contre-moule et le moule forment respectivement l'outil de thermoformage inférieur et l'outil de thermoformage supérieur. Une disposition inverse pourrait être adoptée pour thermoformer l'objet 10 vers le bas.

Le dispositif comprend encore deux bras articulés sur le contre-moule, respectivement 22A et 22B.

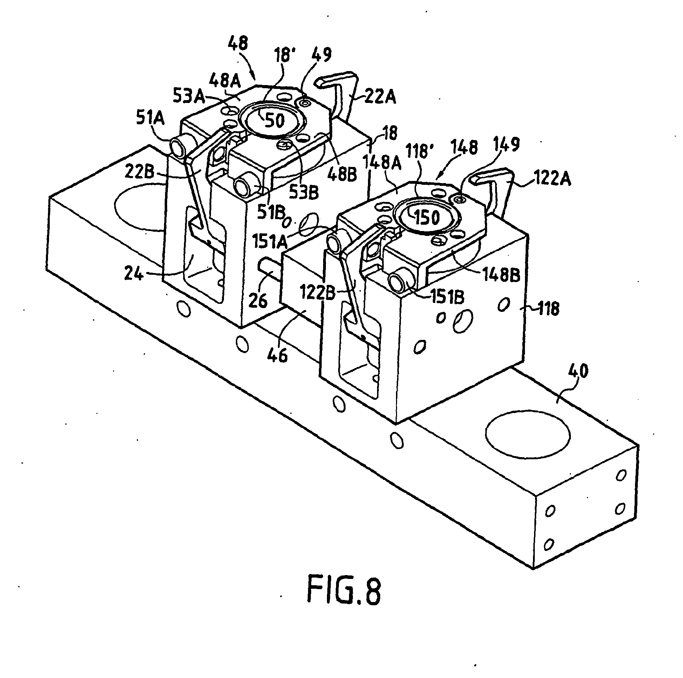

En effet, le dispositif comporte des moyens de maintien qui comprennent des doigts mobiles dans le plan de joint des parties de contre-dépouille du moule. Dans l'exemple représenté, ces doigts sont formés par les extrémités, respectivement 23A et 23B, des bras articulés 22A et 22B. En considérant la figure 8, on comprend que la paroi du contre-moule 18 présente des évidements 24 permettant le montage de ces bras articulés autour de leurs axes 26. Ces axes sont orientés perpendiculairement à la direction D de déplacement du piston de thermoformage.

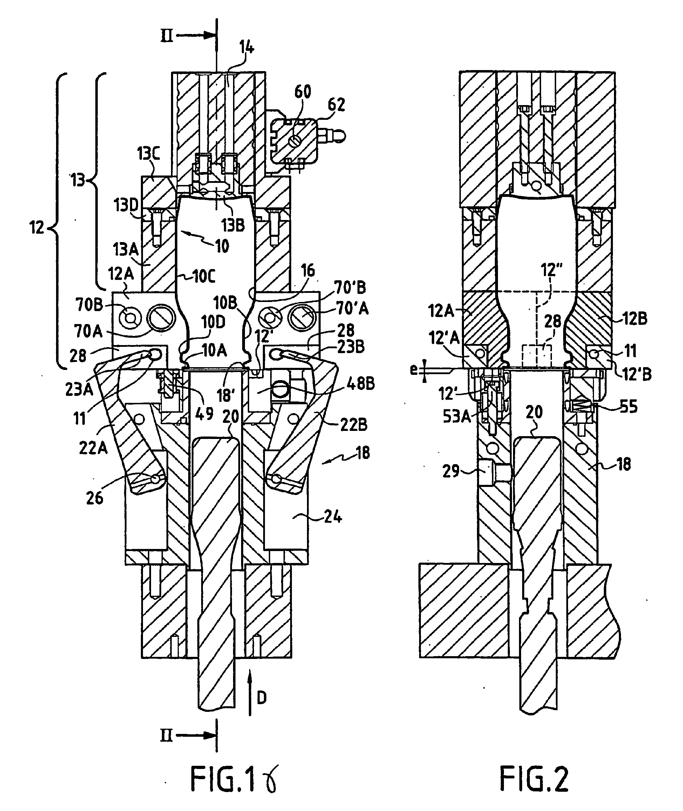

Sur les figures 1 et 8, les moyens de maintien constitués par les doigts 23A et 23B occupent leur position inactive dans laquelle ils sont écartés de l'extrémité 12' du contre-moule. Les doigts 23A et 23B sont alors partiellement logés dans des renfoncements 28 (figure 1) qui sont chacun ménagés pour partie dans chacune des deux parties de contre-dépouille 12A et 12B, au voisinage de l'extrémité 12' du moule.

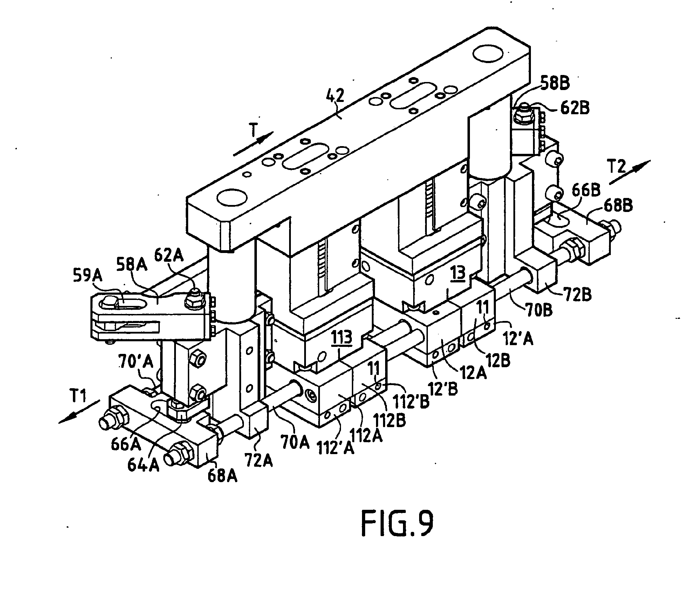

Comme on le comprend en considérant par exemple les figures 2 et 9, les parties de contre-dépouille 12A et 12B portent des plaques de refroidissement, respectivement 12'A et 12'B qui sont pourvues de perçages 11, dans lesquels peut circuler du fluide de refroidissement, par exemple de l'air. C'est entre ces plaques de refroidissement que sont ménagés les renfoncements 28 précédemment évoqués.

Sur la figure 2, on a représenté en trait interrompu le plan de joint 12" entre les portions 12A et 12B de contre-dépouille du moule, et également le renfoncement 28 dans lequel est disposé le doigt 23A.

Sur les figures 1 et 2, le moule est fermé, c'est-à-dire que les parties de contre-dépouille 12A et 12B sont refermées l'une contre l'autre dans leur plan de joint, et que leur périphérie interne définit, avec celle de la partie de fond du moule et avec l'extrémité 18' du contre-moule, la cavité 16 précédemment évoquée. Dans cette situation, une pièce de matériau thermoplastique telle qu'une pastille peut être pincée entre les bords en regard du moule et du contre-moule, avant d'être déformée par le piston de thermoformage pour être amenée dans la cavité 16. Elle épouse la paroi de cette cavité grâce à l'insufflation d'air par l'orifice 29 situé dans le contre-moule 18.

Bien entendu, la pastille de matériau thermoplastique a subi, avant d'être disposée entre le moule et le contre-moule, une étape de chauffage dans une boîte de chauffe et une étape de transfert de la station de chauffage au dispositif de thermoformage. Tous moyens de chauffage et de transfert peuvent être envisagés pour disposer la pastille chaude entre le moule et le contre-moule. En particulier, on pourra s'inspirer de ceux que divulguent FR-2 766 123 et FR 01 11031 non encore publié à la date du dépôt de la présente demande de brevet.

Sur les figures 1 et 2, le récipient 10 vient d'être thermoformé et le piston 20 vient d'être ramené dans sa position basse, à l'intérieur du contre-moule. Il s'agit alors de démouler le récipient 10.

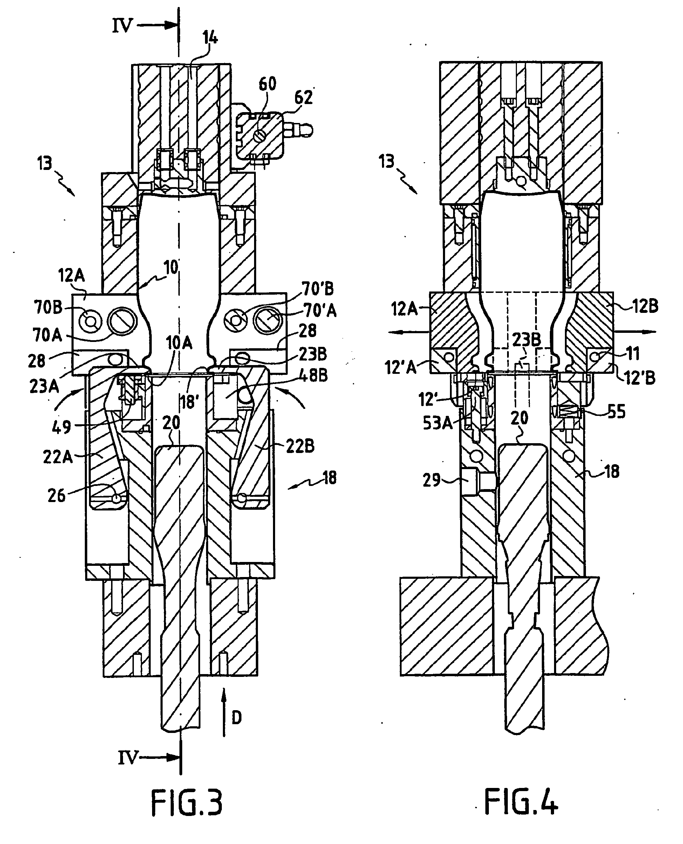

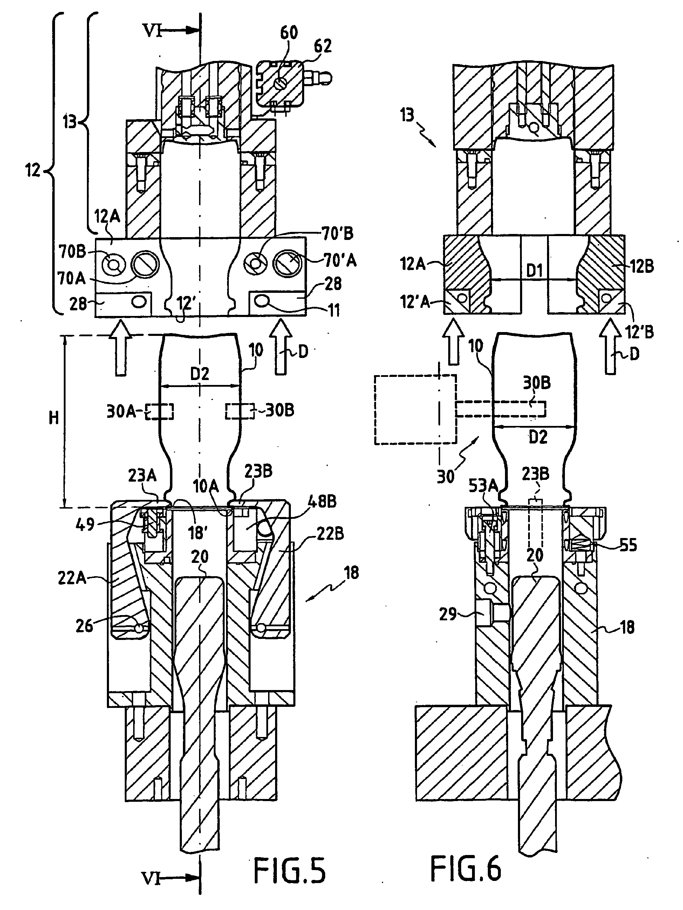

Ce démoulage s'opère selon une séquence de déplacement relatif des différentes parties du moule dont les phases successives sont respectivement représentées par les figures 3 et 4 d'une part, et par les figures 5 et 6, d'autre part.

Sur la figure 4, on voit que les deux parties de contre-dépouille 12A et 12B ont été écartées l'une de l'autre. Profitant de cet écartement, des moyens de maintien ont pu être activés et l'on voit sur la figure 3 que les bras 22A et 22B ont pivoté autour de leurs axes 26 respectifs de telle sorte que leurs extrémités formant les doigts 23A et 23B se trouvent au-dessus de l'extrémité 18' du contre-moule. Les moyens de maintien sont donc activés par un déplacement dans l'interstice ménagé entre les parties de contre-dépouille 12A et 12B du fait de leur écartement. Dans cette position, les doigts 23A et 23B maintiennent le rebord 10A du récipient 10 contre l'extrémité 18' du contre-moule. Durant cette phase d'écartement respectif des parties 12A et 12B de contre-dépouille et de manoeuvre des moyens de maintien 23A et 23B, le récipient 10A continue d'être correctement maintenu car la partie de fond 10C du moule n'a pas bougé de manière notable. Il n'y a donc aucun risque de basculement ou de chute du récipient 10. Dès que les parties 12A et 12B ont été suffisamment écartées, les bras ont pu être commandés pour venir maintenir le rebord du récipient sur l'extrémité du contre-moule.

On peut alors mettre en oeuvre la phase suivante de la séquence, représentée sur les figures 5 et 6. Cette phase consiste à déplacer au moins la partie de fond 13 du moule pour démouler le récipient 10 tout en maintenant ce dernier à l'aide des doigts 23A et 23B, qui continuent de pincer le rebord 10A du récipient contre l'extrémité 18' du contre-moule.

En l'espèce, c'est avec le rebord 10A du récipient 10 que coopèrent les doigts de maintien. Ce rebord, lors qu'il est présent, constitue en effet une partie saillante qui peut aisément être retenue par les doigts. Ils pourraient toutefois également s'accrocher derrière la collerette 10 D.

Ce système pourrait aussi s'appliquer à des objets sans rebord ou sans partie saillante notable, par exemple en augmentant la surface de contact entre les extrémités des doigts de maintien et la paroi de l'objet, ces extrémités pouvant être dotées d'une forme concave adaptée au contour de l'objet. On peut également concevoir que les doigts, dans leur position active, déforment élastiquement la paroi de l'objet pour mieux le maintenir.

Selon une première variante envisageable, durant cette dernière phase du démoulage, seule la partie de fond 13 du moule est déplacée dans la direction D de déplacement du piston de thermoformage de manière à s'éloigner du contre-moule, tandis que les parties de contre-dépouillé sont simplement suffisamment écartées par une translation relative perpendiculairement à cette direction D pour permettre que le récipient soit ensuite saisi par des moyens de préhension tels qu'une pince 30 et soit éloigné de l'outil de thermoformage en étant porté par ces moyens de préhension.

Selon une variante avantageuse représentée sur les dessins, les parties de contre-dépouille 12A et 12B du moule sont solidaires du déplacement de la partie de fond 13.

Dans ce cas, durant la première phase, les deux parties de contre-dépouille 12A et 12B se sont simplement écartées l'une de l'autre de manière à délimiter entre elles des dimensions diamétrales minimales D1 qui sont au moins égales aux dimensions diamétrales extérieures maximales D2 du récipient 10, également définies par les dimensions de la cavité 16. Dans ces conditions, il suffit, pour réaliser le démoulage, de déplacer l'ensemble du moule dans la direction D sur une distance suffisante pour que l'extrémité 12' du moule soit éloignée de l'extrémité 18' du contre-moule d'une distance supérieure à la hauteur totale H du récipient, ce que montrent les figures 5 et 6. Dans cette situation, le récipient 10 étant toujours maintenu contre l'extrémité du contre-moule par les doigts 23A et 23B, il suffit de le saisir par des moyens de préhension tels que les bras 30A et 30B d'une pince 30, par exemple du type représenté de manière schématique dans FR-2 766 123 et, seulement ensuite, de commander les doigts de maintien pour qu'ils reprennent leur position inactive dans laquelle ils sont écartés de l'extrémité du contre-moule, afin de déplacer les moyens de préhension maintenant le récipient 10 pour évacuer ce dernier du dispositif de thermoformage en le plaçant par exemple dans une station de remplissage d'une installation de thermoformage et de remplissage.

Ainsi, les moyens de préhension 30A et 30B et les moyens de maintien 23A, 23B sont aptes à être commandés de telle sorte que les moyens de préhension 30A, 30B saisissent le récipient 10 alors que les moyens de maintien 23A, 23B maintiennent ce dernier contre l'extrémité 18' du contre-moule 18, puis les moyens de maintien 23A, 23B cessent de maintenir le récipient et les moyens de préhension 30A, 30B sont déplacés pour amener ce récipient hors du dispositif de thermoformage.

Avantageusement, le moule 12 et le contre-moule 18 sont aptes à être déplacés l'un par rapport à l'autre pour placer leurs extrémités respectives 12' et 18' hors de contact avant l'écartement des deux parties de contre-dépouille 12A et 12B. Cette variante n'est pas représentée mais on comprend en considérant la figure 2, qu'il suffirait de déplacer l'un par rapport à l'autre le moule et le contre-moule dans la direction D de manière à écarter leurs extrémités respectives d'une petite distance e par exemple de l'ordre de quelques dizaines de millimètres sans opérer encore le démoulage, avant de réaliser le déplacement relatif des parties de contre-dépouille du moule représenté sur les figures 3 et 4.

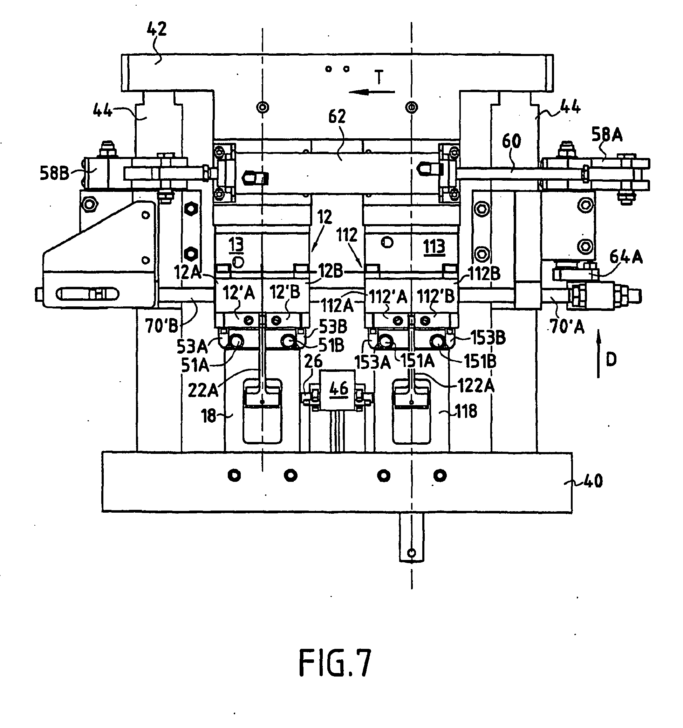

La figure 7 montre un système de thermoformage utilisant deux dispositifs du type qui vient d'être décrit, sachant bien entendu qu'un nombre différent de dispositifs (un seul ou davantage de deux) pourraient être utilisés dans un même système. Sur la figure 7, le dispositif de gauche est affecté des références utilisées sur les figures 1 à 6, tandis que le dispositif de droite est affecté des mêmes références augmentées de 100.

Les deux contre-moules 18 et 118 sont portés par une même plaque de support inférieure 40, tandis que les deux moules 12 et 112 sont portés par une même plaque de support supérieure 42. Il convient de rappeler que la disposition des moules et contre-moules pourrait être inversée, les moules pouvant être situés sous les contre-moules.

Les plaques 40 et 42 sont mobiles l'une par rapport à l'autre en étant guidées par des colonnes de guidage 44. A l'aide de vérins non représentés, elles peuvent être écartées l'une de l'autre de manière à déplacer relativement les moules et contre-moules dans la direction D. En considérant les figures 7 et 8, on voit que l'axe 26 de pivotement des bras 22A et 122A s'étend dans l'espace ménagé entre les deux blocs de contre-moules 18 et 118, et qu'un vérin 46 coopère avec cet axe pour faire pivoter simultanément les bras 22A et 122A. Ce vérin 46 coopère également avec l'axe 26 qui relie les bras 22B et 122B entre les deux blocs de contre-moules de manière à les faire également pivoter simultanément. Ainsi, la commande du vérin 46 place simultanément les moyens de maintien des deux contre-moules dans leurs positions actives respectives ou bien dans leurs positions inactives respectives.

Sur la figure 8, on voit ces moyens de maintien dans leur position inactive. On constate également sur cette figure que les extrémités 18' et 118' des contre-moules 18 et 118 portent chacune une pince de conformation, respectivement 48 et 148 ayant chacune deux bras, respectivement 48A, 48B et 148A et 148B. Lorsque le moule est séparé du contre-moule, les bras de ces pinces sont écartés l'un de l'autre, de manière à ménager une ouverture relativement large à l'extrémité du contre-moule. Une pastille de matériau thermoplastique, même si elle est légèrement déformée à l'issue de son chauffage dans la boîte de chauffe, peut donc être disposée à l'extrémité du contre-moule en étant posée sur un rebord de matriçage respectivement 50 et 150 formé à l'extrémité du contre-moule, respectivement 18' et 118', à l'intérieur de l'ouverture ménagée entre les bras de la pince de conformation. Ces bras sont montés pivotant l'un par rapport à l'autre autour d'un axe 49, 149 parallèle à la direction D de déplacement du piston de thermoformage. Cet axe 49 est également visible sur les figures 1, 3 et 5.

Les extrémités des bras 48A et 48B opposées à leur axe 49 portent chacune un galet, respectivement 51A et 51B. De même, les extrémités des bras 148A et 148 portent chacune un galet respectivement 151A et 151B. L'extrémité du moule 12 porte, quant à elle, des doigts, respectivement 53A et 53B (voir figure 7) qui, lors du rapprochement du moule 12 et du contre-moule 18 en vue de pincer entre eux la pastille de matériau thermoplastique, coopèrent par des rampes qu'ils présentent avec les galets 51A et 51B pour refermer la pince 48 en rapprochant ses deux bras l'un de l'autre. De même, l'extrémité du moule 112 porte des doigts 153A et 153B analogues, aptes à coopérer avec les galets 151A et 151B.

Ainsi que cela est décrit dans la demande FR 0111031, les extrémités du moule et du contre-moule peuvent former des moyens de matriçage pour les bords de la pastille de matériau thermoplastique.

L'ouverture des bras de la pince 48 peut être limitée par des moyens de butée respectivement 53A et 53B formés par les tétons fixes pénétrant dans des fenêtres réalisées dans les bras. De plus, ces bras sont constamment rappelés dans leur position écartée par des moyens élastiques non représentés. La pince 48 peut être montée sur des ressorts 55 (voir figures 2, 4 et 6) qui la rappellent en permanence dans sa position haute représentée sur la figure 8, dans laquelle l'épaisseur d'une pastille peut être logée dans l'épaisseur des bras 48A et 48B qui dépassent au-delà du bord de matriçage 50, et qui peuvent être comprimés lors de la fermeture du moule contre le contre-moule pour ramener sensiblement la face supérieure de la pince dans le plan de l'extrémité supérieure 18' du contre-moule ainsi que cela est visible sur les figures 1 à 6.

En référence aux figures 7 à 9, on décrit maintenant plus en détail la partie supérieure du système de thermoformage qui comprend les moules des deux dispositifs de thermoformage. On voit que le système comporte des bielles, respectivement 58A et 58B qui sont reliées par un même tube 60 dont les deux extrémités coopèrent respectivement avec des lumières oblongues, telles que la lumière 59A, formées dans chacune des deux bielles. Ce tube 60 est déplacé par un vérin 62 que l'on voit également sur les figures 1, 3 et 5. A son extrémité opposée à la lumière avec laquelle coopère une extrémité du tube 60, chaque bielle porte un axe vertical, respectivement 62A et 62B, qui est entraîné en rotation par le déplacement de la bielle de manière à entraîner également en rotation un excentrique tel que l'excentrique 64A visible sur les figures 7 et 9. Cet excentrique comporte un téton qui coopère avec une lumière, respectivement 66A et 66B formée dans une plaquette, respectivement 68A et 68B. La plaquette 68A porte deux barres horizontales de déplacement, respectivement 70A et 70'A, tandis que la plaquette 68B porte également deux barres horizontales de déplacement, respectivement 70B et 70'B. Les barres 70A et 70'A traversent les parties de contre-dépouille 12A, 12B et 112A, les parties de contre-dépouille 12A et 112A étant solidaires du déplacement des barres 70A et 70'A, tandis que lesdites barres coulissent librement par rapport à la partie 12B. De même, les barres 70B et 70'B traversent les parties de contre-dépouille 112B, 112A et 12B, les parties 112B et 12B étant solidaires du déplacement des barres 70B et 70'B, tandis que ces barres coulissent librement dans les parties 112A.

Les figures 7 et 9 montrent la disposition dans laquelle les parties de contre-dépouille 12A et 12B, d'une part et 112A et 112B d'autre part, sont refermées les unes contre les autres. Lorsque le vérin 62 est commandé, la tige 60 peut être déplacée dans le sens T indiqué sur les figures 7 et 9 ce qui a pour effet de faire pivoter les excentriques entraînés par les axes 62A et 62B dans les lumières 66A et 66B, et de déplacer en conséquence les plaquettes 68A et 68B. La disposition des excentriques dans leurs lumières respectives 66A et 66B étant inversée, le déplacement a pour effet d'écarter les plaquettes 68A et 68B en les déplaçant respectivement dans le sens T1 et dans le sens T2 (qui, en l'espèce, est identique au sens T). En conséquence, les parties de contre-dépouille 12A et 12B sont écartées l'une de l'autre, et les parties de contre-dépouille 112A et 112B sont également écartées l'une de l'autre. Des barres 70A, 70B, 70'A, 70'B sont portées par une partie de support, respectivement 72A et 72B qui est elle-même portée par la plaque de support 42. Ainsi, les parties de contre-dépouille des moules sont solidaires du déplacement vertical des parties de fond 13 et 113 de ces moules.

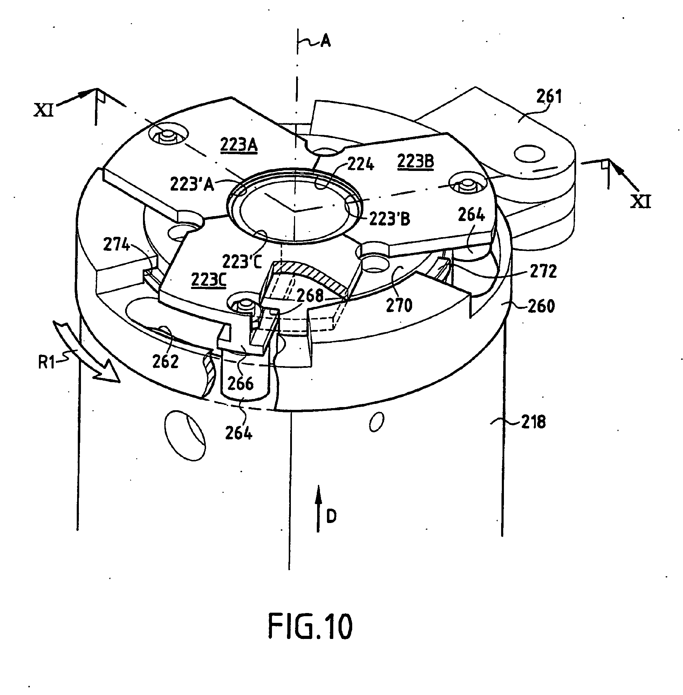

En référence aux figures 10 à 13, on décrit maintenant un deuxième mode de réalisation de l'invention.

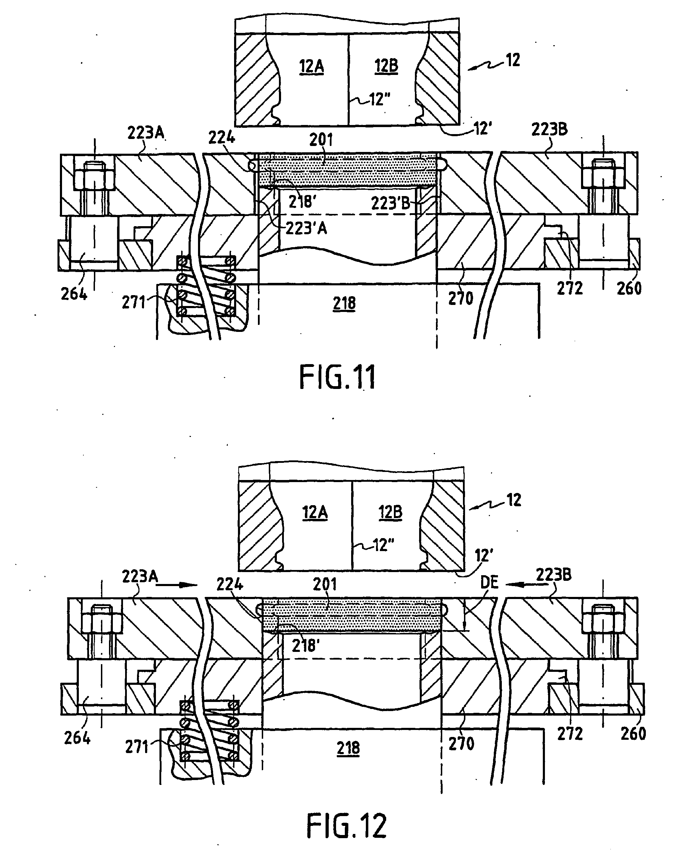

La figure 10 montre la partie supérieure d'un contre-moule 218 qui porte des organes de maintien 223A, 223B et 223C. Ces organes de maintien présentent des portions de bord, respectivement 223'A, 223'B et 223'C qui, dans la position active des organes de maintien représentés sur la figure 10, délimitent à l'extrémité du contre-moule un contour fermé. Comme on le voit sur les figures 11 à 13, une pastille de matériau thermoplastique 201 disposée sur l'extrémité 218' du contre-moule 218 peut être calée dans ce contour fermé pour réaliser un objet tel que le récipient 10 des figures précédentes. Les organes de maintien sont formés par des plaquettes ou des doigts qui peuvent se déplacer radialement par rapport à l'axe A du contre-moule 218, cet axe étant parallèle à la direction D de déplacement du piston de thermoformage. Pour cela, une couronne porte-came 260 disposée à l'extrémité du contre-moule 218 peut être entraînée en rotation par un vérin dont on a seulement représenté la tête 261. Cette couronne présente des lumières 262 formant des cames dans lesquelles sont disposés des galets 264 solidaires, chacun, d'un organe de maintien 223A, 223B ou 223C. Les lumières 262 forment des portions excentriques avec lesquelles coopèrent ces galets et l'on comprend qu'une rotation de la couronne 260 dans le sens R1 a pour effet d'éloigner les bords des organes de maintien de l'axe A pour amener lesdits organes dans leur position inactive, tandis qu'une rotation de la couronne dans le sens opposé a au contraire pour effet de rapprocher les bords des organes de maintien pour amener ces derniers dans leur position active représentée sur la figure 10.

Entre leurs deux positions, les organes de maintien se déplacent radialement en étant guidés par des moyens de guidage tels que, pour chaque organe de guidage, une nervure rectiligne 266 ayant par exemple une section en T inversé, coulissant dans une rainure 268 qui a une section complémentaire et qui est formée dans une plaque centrale 270 au-dessus de laquelle sont disposés les organes de maintien. Cette plaque présente globalement la forme d'un anneau qui entoure la partie d'extrémité supérieure du contre-moule à l'intérieur de laquelle se déplace le piston de thermoformage.

La plaque 270 permet également de guider la rotation de la couronne 260. A cet effet, la périphérie extérieure de cette plaque présente une nervure annulaire 272 ou plusieurs tronçons de nervure annulaire tandis que, sur sa périphérie interne coopérant avec ladite périphérie externe, la couronne 260 présente une rainure annulaire 274 disposée autour de la nervure 272.

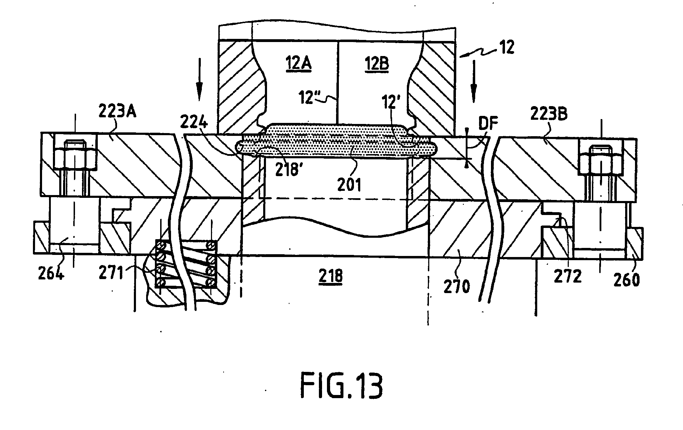

Comme indiqué de manière schématique sur les figures 11 à 13, la plaque 270 et la couronne 260 qui est portée par cette plaque, de même que les organes de maintien 223A, 223B et 223C, sont supportés par rapport au corps du contre-moule par des ressorts 271. En effet, les organes de maintien sont ainsi supportés élastiquement par rapport au contre-moule entre une position de calage, visible sur la figure 11 et sur la figure 12, dans laquelle, le moule étant éloigné du contre-moule, lesdits organes dépassent au-delà de l'extrémité du contre-moule sur une distance de dépassement donnée DE et une position d'effacement, représentée sur la figure 13, dans laquelle ce dépassement est annulé ou diminué.

En l'espèce, dans la position d'effacement représentée sur la figure 13, la distance de dépassement est ramenée à une distance DF qui est inférieure à la distance DE sans être nulle.

En effet, les portions de bord 223'A, 223'B et 223'C présentent au moins un relief d'ancrage dans le matériau thermoplastique et, dans la position d'effacement de la figure 13, ce relief se trouve dans une région des organes de maintien qui continue de dépasser au-delà de l'extrémité supérieure 218' du contre-moule. Ce relief peut être formé en creux ou en saillie. En l'espèce, il s'agit d'une gorge annulaire 224 qui est formée de plusieurs portions de gorge réalisées, chacune, sur la portion de bord d'un organe de maintien. Lorsque, les organes de maintien étant dans leur position active, ces portions de bords délimitent un contour fermé, ces portions de gorge forment ensemble une gorge continue 224.

Plutôt qu'une gorge continue, on pourrait prévoir plusieurs portions en creux sur les bords des organes de maintien formant une pluralité de reliefs d'ancrage en creux. On pourrait également, bien entendu, prévoir une pluralité de nervures en saillie, ou bien des portions de nervures disposées de manière à former une nervure annulaire continue lorsque les organes de maintien sont dans leur position active.

Les organes de maintien étant initialement dans leur position inactive visible sur la figure 11, dans laquelle ils sont chacun déplacés par rapport à la position active de la figure 10 en s'écartant de l'axe, ils délimitent, considérés ensemble, une ouverture de diamètre supérieur à celui de l'extrémité supérieure du contre-moule.

Ensuite, comme indiqué par les flèches de la figure 12, on amène les organes de maintien dans leur position active de telle sorte que leurs portions de bords respectives coopèrent avec la tranche de la pastille 201. Le contour fermé délimité par les portions de bords des organes de maintien dans leur position active correspond au contour d'une partie du récipient devant être thermoformé et, si la pastille a été légèrement déformée, cette étape de déplacement des organes de maintien vers leur position active permet de conformer le pourtour de la pastille de manière à lui donner la forme souhaitée.

A ce stade, le moule étant toujours écarté du contre-moule ou, tout au moins, n'exerçant pas de pression sur ce dernier, les organes de maintien occupent toujours leur position de calage. Comme on le voit sur la figure 13, on peut alors déplacer le moule vers le contre-moule pour venir pincer la pastille 201 entre les extrémités en regard du contre-moule et du moule. Ce faisant, le moule exerce une pression sur les organes de maintien qui a pour effet de les amener dans leur position d'effacement de la figure 13. Evidemment, ce déplacement affecte également la couronne 260 et la plaque 270.

Le matériau de la pastille 201 étant chaud, il peut être alors déformé plastiquement et tend à emplir la gorge 224. Ce phénomène permet également de réaliser un matriçage du bord de la pastille qui donnera sa forme à la portion de bord de l'objet thermoformé. Dans cette situation, on réalise ensuite un thermoformage de manière classique par un déplacement du piston de thermoformage à l'intérieur de la cavité du moule.

Lorsque l'opération de thermoformage est terminée, il s'agit de démouler l'objet thermoformé. Pour cela, comme indiqué précédemment, conformément à l'invention, on écarte les parties de contre-dépouille 12A et 12B du moule sans déplacer la partie de fond de ce moule. Dans cette situation, l'objet qui vient d'être thermoformé reste parfaitement maintenu du fait de la présence de la nervure de matériau thermoplastique qui s'est formée à l'intérieur de la gorge 224. Ceci s'oppose à tout arrachement ou tout basculement intempestif de l'objet par rapport au contre-moule.

Avantageusement, avant d'opérer ce déplacement relatif des parties de contre-dépouille du moule, on a légèrement relevé celui-ci de manière à faire sensiblement cesser la pression exercée par le moule sur le contre-moule. Du fait de la présence des ressorts 271 évoqués précédemment, les organes de maintien, de même que la couronne 260 et la plaque 270, se soulèvent alors légèrement par rapport au corps du contre-moule. Le récipient qui vient d'être thermoformé s'écarte donc légèrement de l'extrémité 218' du contre-moule, mais il reste parfaitement maintenu à l'intérieur du contour fermé délimité par les portions de bords des organes de maintien.

Comme indiqué précédemment, on pourrait prévoir, comme relief d'ancrage pour favoriser le maintien de l'objet thermoformé par les moyens de maintien, une ou plusieurs saillies formées sur les portions de bords des organes de maintien. Dans ces conditions, lorsque les organes de maintien sont amenés dans leur position active comme sur la figure 12, ces saillies ont tendance à s'accrocher dans la tranche de pastille de matériau thermoplastique. Ensuite, lorsque le moule est déplacé vers le contre-moule pour parvenir à la situation de la figure 13, ces reliefs en saillie se déplacent par rapport à la pastille qui remplit par ailleurs l'espace délimité entre les extrémités en regard du moule et du contre-moule.

Dans le deuxième mode de réalisation de l'invention, les organes de maintien occupent leur position active durant le thermoformage et l'on comprend sur la figure 13 qu'ils délimitent alors une partie de la paroi de la cavité de thermoformage. Plus précisément, une portion de cette cavité située entre les extrémités en regard du moule et du contre-moule est délimitée par la partie des portions de bords des organes de maintien qui dépasse de la distance DF au-delà de l'extrémité 218' du contre-moule.

Dans ce deuxième mode de réalisation, le moule peut être identique à celui qui a été décrit en référence aux figures précédentes, en particulier en référence à la figure 9.

On pourrait, dans le premier mode de réalisation, remplacer les doigts de maintien 22A et 22B par une conformation appropriée des portions de bords des pinces de conformation 48A et 48B, qui joueraient alors le même rôle que les organes de maintien 223A, 223B et 223C du deuxième mode de réalisation. Il faudra alors toutefois modifier le mode d'actionnement des bras de ces pinces, en utilisant par exemple un vérin qui les rapprocherait ou les écarterait indépendamment du déplacement du moule, de telle sorte que ces bras restent fermés lors de l'écartement relatif des parties de contre-dépouille du moule pour continuer de maintenir l'objet lors de ce déplacement.

Dans le deuxième mode de réalisation, les reliefs d'ancrage génèrent des empreintes dans la paroi de l'objet thermoformé. Ces empreintes peuvent être formées dans le rebord ou bien être sous ce dernier.

Les reliefs d'ancrage peuvent également contribuer à former une partie spécifique de cet objet, par exemple une portion de la collerette d'accrochage d'une ceinture d'inviolabilité pour un bouchon.

## Revendications

1. Dispositif pour le thermoformage d'un objet (10) présentant une portion en contre-dépouille (10B) et une portion de fond (10C), le dispositif comprenant un moule de thermoformage (12 ; 112) ayant au moins deux parties de contre-dépouille (12A, 12B ; 112A, 1128) voisines d'une extrémité ouverte (12') et une partie de fond (13 ; 113), un contre-moule (18 ; 118 ; 218) ayant une extrémité (18'; 118'; 218') apte à coopérer avec ladite extrémité du moule pour pincer contre cette dernière une pièce de matériau thermoplastique et définir, avec lesdites parties du moule, une cavité (16) de thermoformage, et un piston de thermoformage (20), mobile entre une position active de thermoformage dans laquelle il pénètre dans ladite cavité (16) et une position inactive dans laquelle il se trouve en dehors de cette cavité, les deux parties de contre-dépouille du moule étant susceptibles d'être écartées l'une de l'autre pour permettre le démoulage de l'objet, le dispositif comprenant, en outre, des moyens de maintien (23A, 23B ; 223A, 223B, 223C) aptes à maintenir l'objet (10), dispositif dans lequel, pour le démoulage de l'objet thermoformé, lesdites parties (12A, 12B ; 13 ; 112A, 112B, 113) du moule (12 ; 112) et les moyens de maintien (23A, 23B ; 223A, 223B, 223C) sont aptes à être commandés selon une séquence dans laquelle les parties (12A, 12B ; 112A, 112B) de contre-dépouille du moule (12 ; 112) sont écartées, lesdits moyens de maintien (23A, 23B ; 223A, 223B, 223C) sont actifs et au moins la partie de fond (13 ; 113) du moule (12 ; 112) est éloignée du contre-moule pendant que les moyens de maintien sont actifs,
**caractérisé en ce que** les moyens de maintien (23A, 23B ; 223A, 223B, 223C) sont aptes à maintenir l'objet (10) par rapport au contre-moule (18 ; 118 ; 218) et **en ce que**, lorsque les moyens de maintien (23A, 23B; 223A 223B, 223C) sont actifs pendant ladite séquence, ils maintiennent l'objet (10) par rapport au contre-moule.

2. Dispositif selon la revendication 1, **caractérisé en ce que** les parties de contre-dépouille (12A, 12B ; 112A, 112B) du moule (12 ; 112) sont solidaires du déplacement de la partie de fond (13 ; 113) du moule.

3. Dispositif selon la revendication 1 ou 2, **caractérisé en ce que** le moule (12 ; 112) et le contre-moule (18 ; 118 ; 218) sont aptes à être déplacés (e) l'un par rapport à l'autre pour placer leurs extrémités respectives (12' ; 18', 118') hors de contact avant l'écartement des deux parties de contre-dépouille (12A, 12B ; 112A, 112B) du moule.

4. Dispositif selon l'une quelconque des revendications 1 à 3, **caractérisé en ce qu'**il comprend, en outre, des moyens de préhension (30A, 30B) aptes à saisir l'objet à l'issue de son démoulage, lesdits moyens de préhension et les moyens de maintien (23A, 23B ; 223A, 223B, 223C) étant aptes à être commandés de telle sorte que les moyens de préhension (30A, 30B) saisissent l'objet (10) alors que les moyens de maintien (23A, 23B ; 223A, 223B, 223C) maintiennent ce dernier contre l'extrémité (18' ; 118' ; 218') du contre-moule (18 ; 118 ; 218), puis les moyens de maintien (23A, 23B ; 223A, 223B, 223C) cessent de maintenir l'objet (10) et les moyens de préhension (30A, 30B) sont déplacés pour amener l'objet hors du dispositif de thermoformage.

5. Dispositif selon l'une quelconque des revendications 1 à 4, **caractérisé en ce que** les moyens de maintien comprennent des organes de maintien (23A, 23B ; 223A, 223B, 223C) aptes à être déplacés entre une position active dans laquelle ils sont aptes à maintenir l'objet (10) par rapport au contre-moule (18 ; 118 ; 218) et une position inactive.

6. Dispositif selon la revendication 5, **caractérisé en ce que** les moyens de maintien comprennent des doigts (23A, 23B) solidaires de bras (22A, 22B ; 122A, 122B) articulés sur le contre-moule (18).

7. Dispositif selon l'une quelconque des revendications 1 à 6, **caractérisé en ce que**, pour le démoulage de l'objet, lesdites parties (12A, 12B, 13 ; 112A, 112B, 113) du moule et les moyens de maintien (223A, 23B) sont aptes à être commandés selon une séquence dans laquelle, successivement, les parties de contre-dépouille du moule (12A, 12B ; 112A, 112B) sont écartées, les moyens de maintien (23A, 23B) passent d'une position inactive à une position active dans laquelle ils maintiennent l'objet (10) par rapport au contre-moule (18 ; 118), et la partie de fond (13 ; 113) du moule est éloignée du contre-moule.

8. Dispositif selon la revendication 7, **caractérisé en ce que** les moyens de maintien comprennent des doigts (23A, 23B) qui sont mobiles dans le plan de joint des parties de contre-dépouille (12A, 12B ; 112A, 112B) du moule (12 ; 112).

9. Dispositif selon l'une quelconque des revendications 1 à 7, **caractérisé en ce que** les moyens de maintien (223A, 223B, 223C) sont aptes à occuper une position inactive et une position active dans laquelle ils délimitent une partie de la paroi de la cavité (10) de thermoformage et dans laquelle ils sont aptes à maintenir l'objet par rapport au contre-moule (218) et **en ce que** lesdits moyens de maintien sont aptes à occuper leur position active pendant le thermoformage de l'objet et pendant l'écartement des parties de contre-dépouille (12A, 12B ; 112A, 112B) du moule.

10. Dispositif selon les revendications 5 et 9, **caractérisé en ce que** les organes de maintien (223A, 223B, 223C) présentent des portions de bords (223'A, 223'B, 223'C) qui, dans la position active desdits organes, délimitent, à l'extrémité (218') du contre-moule (218), un contour fermé dans lequel une pastille de matériau thermoplastique (201), disposée sur l'extrémité (218') du contre-moule, peut être calée en vue d'être thermoformée pour réaliser ledit objet.

11. Dispositif selon la revendication 10, **caractérisé en ce que** les organes de maintien (223A, 223B, 223C) sont supportés élastiquement par rapport au contre-moule (218) entre une position de calage dans laquelle, le moule (12) étant éloigné du contre-moule (218), lesdits organes dépassent au-delà de l'extrémité (218') du contre-moule sur une distance de dépassement donnée (DE) et une position d'effacement dans laquelle ce dépassement est annulé ou diminué (DF).

12. Dispositif selon la revendication 10 ou 11, **caractérisé en ce que** les portions de bords (223'A, 223'B, 223'C) présentent au moins un relief d'ancrage (224) dans le matériau thermoplastique.

13. Procédé de thermoformage d'un objet (10) présentant une portion en contre-dépouille (10B) et une portion de fond (10C), dans lequel on utilise un moule de thermoformage (12 ; 112) ayant au moins deux parties de contre-dépouille (12A, 12B ; 112A, 112B) voisines d'une extrémité ouverte (12') et une partie de fond (13 ; 113), on pince une pièce de matériau thermoplastique à l'aide de l'extrémité (18' ; 118' ; 218') d'un contre-moule (18 ; 118 ; 218) contre ladite extrémité du moule et on définit une cavité de thermoformage (16) avec lesdites parties du moule, on amène un piston de thermoformage (20) dans une position active de thermoformage dans laquelle il pénètre dans la cavité (16) du moule à partir d'une position inactive dans laquelle ledit piston se trouve en dehors de ladite cavité et, procédé dans lequel, pour le démoulage de l'objet thermoformé (10), on écarte l'une de l'autre les parties de contre-dépouille (12A, 12B ; 112A, 112B) du moule et on éloigne au moins la partie de fond (13 ; 113) du moule par rapport au contre-moule (18 ; 118 ; 218)
**caractérisé en ce que**, pendant le démoulage, lesdites opérations d'écartement des parties de contre-dépouille (12A, 12B; 112A 112B) du moule et d'éloignement d'au moins la partie de fond (13; 113) du moule sont réalisées tout en maintenant l'objet (10) par rapport au contre-moule (18; 118; 218).

14. Procédé selon la revendication 13, **caractérisé en ce que**, alors qu'on maintient l'objet (10) par rapport au contre-moule (18 ; 118 ; 218), on éloigne les parties de contre-dépouille (12A, 12B ; 112A ; 112B) et la partie de fond (13 ; 113) du moule par rapport au contre-moule (18 ; 118 ; 218).

15. Procédé selon la revendication 13 ou 14, **caractérisé en ce que**, avant d'écarter l'une de l'autre les deux parties de contre-dépouille (12A, 12B ; 112A, 112B) du moule, on déplace l'un par rapport à l'autre le moule (12 ; 112) et le contre-moule (18 ; 118 ; 218) pour placer leurs extrémités respectives hors de contact.

16. Procédé selon l'une quelconque des revendications 13 à 15, **caractérisé en ce que**, à l'issue du démoulage, on saisit l'objet (10) à l'aide de moyens de préhension (30A, 30B), on cesse de maintenir ledit objet par rapport au contre-moule (18 ; 118 ; 218) et on déplace les moyens de préhension portant l'objet.

17. Procédé selon l'une quelconque des revendications 13 à 16, **caractérisé en ce que**, pour maintenir l'objet par rapport au contre-moule, on déplace des organes de maintien (23A, 23B ; 223A, 223B, 223C) d'une position inactive à une position active dans laquelle ils sont aptes à maintenir l'objet (10) par rapport au contre-moule (18 ; 118 ; 218).

18. Procédé selon la revendication 17, **caractérisé en ce que** l'on déplace les organes de maintien (23A, 23B) de leur position inactive à leur position active après avoir écarté l'une de l'autre les parties de contre-dépouille (12A, 12B ; 112A, 112B) du moule.

19. Procédé selon la revendication 18, **caractérisé en ce que**, pour maintenir l'objet (10) par rapport au contre-moule (18 ; 118), on déplace les organes de maintien (23A, 23B) entre les parties de contre-dépouille du moule, écartées l'une de l'autre.

20. Procédé selon la revendication 17, **caractérisé en ce que** l'on déplace les organes de maintien (223A, 223B, 223C) de leur position inactive à leur position active avant de thermoformer l'objet (10) et **en ce que** l'on ramène lesdits organes de maintien dans leur position inactive seulement après avoir écarté l'une de l'autre les parties de contre-dépouille du moule.

21. Procédé selon la revendication 20, **caractérisé en ce que** l'on thermoforme l'objet (10) à partir d'une pastille de matériau thermoplastique (201) et **en ce que**, avant de thermoformer ledit objet, on conforme le pourtour de ladite pastille à l'aide des organes de maintien (223A, 223B, 223C).

## Claims

1. A device for thermoforming an object (10) presenting an undercut portion (10B) and a base portion (10C), the device comprising: a thermoforming mold (12; 112) having a base portion (13; 113) and at least two undercut-forming portions (12A, 12B; 112A, 112B) in the vicinity of an open end (12'); a countermold (18; 118; 218) having an end (18'; 118'; 218') that is suitable for cooperating with said end of the mold so as to clamp a piece of thermoplastic material thereagainst and so as to co-operate with said portions of the mold to define a thermoforming cavity (16); and a thermoforming piston (20) that is mounted to move between a thermoforming active position in which it penetrates into said cavity (16) and an inactive position in which it is situated outside said cavity, the two undercut-forming portions of the mold being suitable for being moved apart so as to enable the object to be unmolded; the device further comprising holding means (23A, 23B; 223A, 223B, 223C) suitable for holding the object (10), in which device, in order to unmold the thermoformed object, said portions (12A, 12B; 13; 112A, 112B, 113) of the mold (12; 112) and the holding means (23A, 23B; 223A, 223B, 223C) are suitable for being controlled in a sequence in which the undercut-forming portions (12A, 12B; 112A, 112B) of the mold (12; 112) are moved apart, said holding means (23A, 23B; 223A, 223B, 223C) are active and at least the base portion (13; 113) of the mold (12; 112) is spaced apart from the countermold while the holding means are active,
said device being **characterized in that** the holding means (23A, 23B; 223A, 223B, 223C) are suitable for holding the object (10) relative to the countermold (18; 118; 218), and **in that** while the holding means (23A, 23B; 223A, 223B, 223C) are active during said sequence, they hold the object (10) relative to the countermold.

2. A device according to claim 1, **characterized in that** the undercut-forming portions (12A, 12B; 112A, 112B) of the mold (12; 112) are constrained to move with the base portion (13; 113) of the mold.

3. A device according to claim 1 or 2, **characterized in that** the mold (12; 112) and the countermold (18; 118; 218) are suitable for being moved (e) relative to each other in order to place their respective ends (12'; 18', 118') out of contact before the two undercut-forming portions (12A, 12B; 112A, 112B) of the mold are moved apart.

4. A device according to any one of claims 1 to 3, **characterized in that** it further comprises pick-up means (30A, 30B) suitable for picking up the object after it has been unmolded, said pick-up means and the holding means (23A, 23B; 223A, 223B, 223C) being suitable for being controlled such that the pick-up means (30A, 30B) pick up the object (10) while the holding means (23A, 23B; 223A, 223B, 223C) are holding said object against the end (18'; 118'; 218') of the countermold (18; 118; 218), then the holding means (231, 23B; 223A, 223B, 223C) cease to hold the object (10) and the pick-up means (30A, 30B) are moved to bring the object out of the thermoforming device.

5. A device according to any one of claims 1 to 4, **characterized in that** the holding means comprise holding members (23A, 23B; 223A, 223B, 223C) suitable for being moved between an active position in which they are suitable for holding the object (10) relative to the countermold (18; 118; 218) and an inactive position.

6. A device according to claim 5, **characterized in that** the holding means comprise fingers (23A, 23B) secured to or integral with arms (22A, 22; 122A, 122B) that are hinged to the countermold (18).

7. A device according to any one of claims 1 to 6, **characterized in that**, for the purpose of unmolding the object, said portions (12A, 12B, 13; 112A, 112B, 113) of the mold and the holding means (223A, 23B) are suitable for being controlled in a sequence in which, in succession, the undercut-forming portions of the mold (12A, 12B; 112A, 112B) are moved apart, the holding means (23A, 23B) go from an inactive position to an active position in which they hold the object (10) relative to the countermold (18; 118), and the base portion (13; 113) of the mold is moved apart from the countermold.

8. A device according to claim 7, **characterized in that** the holding means comprise fingers (23A, 23B) which are mounted to move in the join plane in which the undercut-forming portions (12A, 12B; 112A, 112B) of the mold (12; 112) join.

9. A device according to any one of claims 1 to 7, **characterized in that** the holding means (223A, 223B, 223C) are suitable for taking up an inactive position and an active position in which they define a portion of the wall of the thermoforming cavity (10) and in which they are suitable for holding the object relative to the countermold (218), and **in that** said holding means are suitable for occupying their active position while the object is being thermoformed, and while the undercut-forming portions (12A, 12B; 112A, 112B) of the mold are being moved apart.

10. A device according to claims 5 and 9, **characterized in that** the holding members (223A, 223B, 223C) present edge portions (223'A, 223'B, 223'C) which, when said members are in the active position, define, at the end (218') of the countermold (218), a closed outline in which a pellet of thermoplastic material (201) disposed on the end (218') of the countermold can be wedged for the purpose of being thermoformed in order to form said object.

11. A device according to claim 10, **characterized in that** the holding members (223A, 223B, 223C) are supported resiliently relative to the countermold (218) between a wedging position in which, with the mold (12) being spaced apart from the countermold (218), said members project beyond the end (218') of the countermold over a given projection distance (DE), and a retracted position in which said projection distance is a distance (DF) that is reduced or optionally zero.

12. A device according to claim 10 or 11, **characterized in that** each of the edge portions (223'A, 223'B, 223'C) is provided with at least one anchoring piece in relief (224) for anchoring into the thermoplastic material.

13. A method of thermoforming an object (10) presenting an undercut portion (10B) and a base portion (10C), the method consisting in: using a thermoforming mold (12; 112) having a base portion (13; 113) and at least two undercut-forming portions (12A, 12B; 112A, 112B) in the vicinity of an open end (12'); clamping a piece of thermoplastic material by means of the end (18'; 118'; 218') of a countermold (18; 118; 218) against said end of the mold; defining a thermoforming cavity (16) with said mold portions; bringing a thermoforming piston (20) into a thermoforming active position in which it penetrates into the cavity (16) of the mold from an inactive position in which the piston is situated outside said cavity and, in which method, for the purpose of unmolding the thermoformed object (10), the undercut-forming portions (12A, 12B; 112A, 112B) of the mold are moved apart, and at least the base portion (13; 113) of the mold is moved away from the countermold (18; 118, 218),
said method being **characterized in that** during unmolding said operations of moving the undercut-forming portions (12A, 12B; 112A, 112B) of the mold apart and of moving at least the base portion (13; 113) of the mold away are performed while holding the object (10) relative to the countermold (18; 118; 218).

14. A method according to claim 13, **characterized in that**, while the object (10) is being held relative to the countermold (18; 118; 218), the undercut-forming portions (12A, 12B; 112A; 112B) and the base portion (13; 113) are moved away from the countermold (18; 118; 218).

15. A method according to claim 13 or 14, **characterized in that**, before the undercut-forming portions (12A, 12B; 112A, 112B) of the mold are moved apart, the mold (12; 112) and the countermold (18; 118; 218) are moved relative to each other so as to place their respective ends out of contact.

16. A method according to any one of claims 13 to 15, **characterized in that**, after unmolding, the object (10) is picked up by pick-up means (30A, 30B), said object ceases to be held relative to the countermold (18; 118; 218), and the pick-up means carrying the object are moved.

17. A method according to any one of claims 13 to 16, **characterized in that**, in order to hold the object relative to the countermold, holding means (23A, 23B; 223A, 223B, 223C) are moved from an inactive position to an active position in which they are suitable for holding the object (10) relative to the countermold (18; 118; 218).

18. A method according to claim 17, **characterized in that** the holding means (23A, 23B) are moved from their inactive position to the active position after the undercut-forming portions (12A, 12B; 112A, 112B) of the mold have been moved apart.

19. A method according to claim 18, **characterized in that**, in order to hold the object (10) relative to the countermold (18; 118), the holding members (23A, 23B) are moved between the undercut-forming portions of the mold, as spaced apart from each other.

20. A method according to claim 17, **characterized in that** the holding members (223A, 223B, 223C) are moved from their inactive position to the active position before the object (10) is thermoformed, and **in that** said holding members are returned to their inactive position only once the undercut-forming portions of the mold have been moved apart.

21. A method according to claim 20, **characterized in that** the object (10) is thermoformed from a pellet of thermoplastic material (201), and **in that**, before said object is thermoformed, the periphery of said pellet is shaped by means of the holding members (223A, 223B, 223C).

## Patentansprüche

1. Vorrichtung zum Thermoformen eines Gegenstandes (10), der einen hinterschnittenen Abschnitt (10B) und einen Bodenabschnitt (10C) aufweist, wobei die Vorrichtung folgendes umfaßt, nämlich eine Form zum Thermoformen (12; 112) mit wenigstens zwei Hinterschneidungsteilen (12A, 12B; 112A, 112B), die einem offenen Ende (12') benachbart sind, und mit einem Bodenteil (13; 113), eine Gegenform (18; 118; 218) mit einem Ende (18'; 118'; 218'), das geeignet ist, mit dem Ende der Form zusammenzuwirken, um an letzterem ein Thermoplastteil festzuklemmen und mit den Teilen der Form einen Hohlraum (16) zum Thermoformen zu definieren, sowie einen Thermoformkolben (20), der zwischen einer aktiven Thermoformposition, in der er in den Hohlraum (16) eindringt, und einer inaktiven Position, in der er sich außerhalb dieses Hohlraums befindet, beweglich ist, wobei die beiden Hinterschneidungsteile der Form geeignet sind, voneinander entfernt zu werden, um das Entformen des Gegenstandes zu ermöglichen, wobei die Vorrichtung ferner Haltemittel (23A, 23B; 223A, 223B, 223C) umfaßt, die geeignet sind, den Gegenstand (10) zu halten, Vorrichtung, bei der für das Entformen des thermogeformten Gegenstandes die Teile (12A, 12B; 13; 112A, 112B, 113) der Form (12; 112) und Haltemittel (23A, 23B; 223A, 223B, 223C) geeignet sind, entsprechend einem Ablauf gesteuert zu werden, bei dem die Hinterschneidungsteile (12A, 12B; 112A, 112B) der Form (12; 112) voneinander entfernt werden, die Haltemittel (23A, 23B; 223A, 223B, 223C) aktiv sind und wenigstens der Bodenteil (13; 113) der Form (12; 112) von der Gegenform entfernt wird, während die Haltemittel aktiv sind,
**dadurch gekennzeichnet, daß** die Haltemittel (23A, 23B; 223A, 223B, 223C) geeignet sind, den Gegenstand (10) gegenüber der Gegenform (18; 118; 218) zu halten und daß dann, wenn die Haltemittel (23A, 23B; 223A, 223B, 223C) während des Ablaufs aktiv sind, sie den Gegenstand (10) gegenüber der Gegenform halten.

2. Vorrichtung nach Anspruch 1, **dadurch gekennzeichnet, daß** die Hinterschneidungsteile (12A, 12B; 112A, 112B) der Form (12; 112) mit der Bewegung des Bodenteils (13; 113) der Form fest gekoppelt sind.

3. Vorrichtung nach Anspruch 1 oder 2, **dadurch gekennzeichnet, daß** die Form (12; 112) und die Gegenform (18; 118; 218) geeignet sind, relativ zueinander bewegt zu werden (e), um ihre jeweiligen Enden (12'; 18', 118') vor dem Spreizen der beiden Hinterschneidungsteile (12A, 12B; 112A, 112B) der Form außer Kontakt zu bringen.

4. Vorrichtung nach einem der Ansprüche 1 bis 3, **dadurch gekennzeichnet, daß** sie ferner Greifmittel (30A, 30B) umfaßt, die geeignet sind, den Gegenstand nach seinem Entformen zu erfassen, wobei die Greifmittel und die Haltemittel (23A, 23B; 223A, 223B, 223C) geeignet sind, derart gesteuert zu werden, daß die Greifmittel (30A, 30B) den Gegenstand (10) erfassen, während die Haltemittel (23A, 23B; 223A, 223B, 223C) letzteren an dem Ende (18', 118', 218') der Gegenform (18; 118; 218) halten, anschließend die Haltemittel (23A, 23B; 223A, 223B, 223C) aufhören, den Gegenstand (10) zu halten und die Greifmittel (30A, 30B) bewegt werden, um den Gegenstand aus der Thermoformvorrichtung herauszuführen.

5. Vorrichtung nach einem der Ansprüche 1 bis 4, **dadurch gekennzeichnet, daß** die Haltemittel Halteorgane (23A, 23B; 223A, 223B, 223C) umfassen, die geeignet sind, zwischen einer aktiven Position, in der sie geeignet sind, den Gegenstand (10) gegenüber der Gegenform (18; 118; 218) zu halten, und einer inaktiven Position bewegt zu werden.

6. Vorrichtung nach Anspruch 5, **dadurch gekennzeichnet, daß** die Haltemittel Finger (23A, 23B) aufweisen, die mit an der Gegenform (18) angelenkten Armen (22A, 22B; 122A, 122B) fest verbunden sind.

7. Vorrichtung nach einem der Ansprüche 1 bis 6, **dadurch gekennzeichnet, daß** für das Entformen des Gegenstandes die Teile (12A, 12B, 13; 112A, 112B, 113) der Form und die Haltemittel (223A, 23B) geeignet sind, entsprechend einem Ablauf gesteuert zu werden, bei dem nacheinander die Hinterschneidungsteile der Form (12A, 12B; 112A, 112B) gespreizt werden, die Haltemittel (23A, 23B) von einer inaktiven Position in eine aktive Position, in der sie den Gegenstand (10) gegenüber der Gegenform (18; 118) halten, übergehen und der Bodenteil (13; 113) der Form von der Gegenform entfernt wird.

8. Vorrichtung nach Anspruch 7, **dadurch gekennzeichnet, daß** die Haltemittel Finger (23A, 23B) umfassen, die in der Teilungsebene der Hinterschneidungsteile (12A, 12B; 112A, 112B) der Form (12; 112) beweglich sind.

9. Vorrichtung nach einem der Ansprüche 1 bis 7, **dadurch gekennzeichnet, daß** die Haltemittel (223A, 223B, 223C) geeignet sind, eine inaktive Position und eine aktive Position einzunehmen, in der sie einen Teil der Wand des Thermoformungshohlraumes (16) begrenzen und in der sie geeignet sind, den Gegenstand gegenüber der Gegenform (218) zu halten, und daß die Haltemittel geeignet sind, ihre aktive Position währen des Thermoformens des Gegenstandes und währen des Spreizens der Hinterschneidungsteile (12A, 12B; 112A, 112B) der Form einzunehmen.

10. Vorrichtung nach den Ansprüchen 5 und 9, **dadurch gekennzeichnet, daß** die Halteorgane (223A, 223B, 223C) Randabschnitte (223'A, 223'B, 223'C) aufweisen, die in der aktiven Position der Organe an dem Ende (218') der Gegenform (218) eine geschlossene Kontur umgrenzen, in der eine auf dem Ende (218') der Gegenform angeordnete Thermoplastscheibe (201) festgeklemmt werden kann, um zur Ausbildung des Gegenstandes thermogeformt zu werden.

11. Vorrichtung nach Anspruch 10, **dadurch gekennzeichnet, daß** die Halteorgane (223A, 223B, 223C) gegenüber der Gegenform (218) zwischen einer Klemmposition, in der - während die Form (12) von der Gegenform (218) entfernt ist - die genannten Organe über das Ende (218') der Gegenform um einen gegebenen Überstand (DE) hinausragen, und einer Rückstellposition, in der dieser Überstand aufgehoben oder verringert ist (DF), elastische gehalten sind.

12. Vorrichtung nach Anspruch 10 oder 11, **dadurch gekennzeichnet, daß** die Randabschnitte (223'A; 223'B, 223'C) wenigstens eine Erhebung zur Verankerung (224) in dem Thermoplast aufweisen.

13. Verfahren zum Thermoformen eines Gegenstandes (10), der einen hinterschnittenen Abschnitt (10B) und einen Bodenabschnitt (10C) aufweist, wobei eine Form zum Thermoformen (12; 112) mit wenigstens zwei Hinterschneidungsteilen (12A, 12B; 112A, 112B), die einem offenen Ende (12') benachbart sind, und mit einem Bodenteil (13; 113) verwendet wird, ein Thermoplastteil mit Hilfe des Endes (18'; 118'; 218') einer Gegenform (18; 118; 218) an dem Ende der Form festgeklemmt und mit den Teilen der Form ein Hohlraum (16) zum Thermoformen definiert wird, ein Thermoformkolben (20) in eine aktive Thermoformposition geführt wird, in der er ausgehend von einer inaktiven Position, in der der Kolben sich außerhalb dieses Hohlraums befindet, in den Hohlraum (16) der Form eindringt, Verfahren, bei dem für das Entformen des thermogeformten Gegenstandes (10) die Hinterschneidungsteile (12A, 12B; 112A, 112B) der Form voneinander entfernt werden und wenigstens der Bodenteil (13; 113) der Form von der Gegenform (18; 118; 218) entfernt wird,
**dadurch gekennzeichnet, daß** während des Entformens die Schritte des Spreizens der Hinterschneidungsteile (12A, 12B; 112A, 112B) der Form und des Entfernens wenigstens des Bodenteils (13; 113) der Form unter gleichzeitigem Halten des Gegenstandes (10) gegenüber der Gegenform (18; 118; 218) durchgeführt werden.

14. Verfahren nach Anspruch 13, **dadurch gekennzeichnet, daß** - während der Gegenstand (10) gegenüber der Gegenform (18; 118; 218) gehalten wird - die Hinterschneidungsteile (12A, 12B; 112A, 112B) und der Bodenteil (13; 113) der Form von der Gegenform (18; 118; 218) entfernt werden.

15. Verfahren nach Anspruch 13 oder 14, **dadurch gekennzeichnet, daß** - bevor die beiden Hinterschneidungsteile (12A, 12B; 112A, 112B) der Form voneinander entfernt werden - die Form (12; 112) und die Gegenform (18; 118; 218) relativ zueinander bewegt werden, um ihre jeweiligen Enden außer Kontakt zu bringen.

16. Verfahren nach einem der Ansprüche 13 bis 15, **dadurch gekennzeichnet, daß** nach dem Entformen der Gegenstand (10) mit Hilfe von Greifmitteln (30A, 30B) erfaßt wird, der Gegenstand nicht weiter gegenüber der Gegenform (18; 118; 218) gehalten wird und die den Gegenstand tragenden Greifmittel bewegt werden.

17. Verfahren nach einem der Ansprüche 13 bis 16, **dadurch gekennzeichnet, daß** zum Halten des Gegenstandes gegenüber der Gegenform Halteorgane (23A, 23B; 223A, 223B, 223C) von einer inaktiven Position in eine aktive Position bewegt werden, in der sie geeignet sind, den Gegenstand (10) gegenüber der Gegenform (18; 118; 218) zu halten.

18. Verfahren nach Anspruch 17, **dadurch gekennzeichnet, daß** die Halteorgane (23A, 23B), nachdem die Hinterschneidungsteile (12A, 12B; 112A, 112B) der Form voneinander entfernt wurden, von ihrer inaktiven Position in ihre aktive Position bewegt werden.

19. Verfahren nach Anspruch 18, **dadurch gekennzeichnet, daß** zum Halten des Gegenstandes (10) gegenüber der Gegenform (18; 118) die Halteorgane (23A, 23B) zwischen den voneinander entfernten Hinterschneidungsteilen der Form bewegt werden.

20. Verfahren nach Anspruch 17, **dadurch gekennzeichnet, daß** die Halteorgane (223A, 223B, 223C) vor dem Thermoformen des Gegenstandes (10) von ihrer inaktiven Position in ihre aktive Position bewegt werden und daß die Halteorgane erst nachdem die Hinterschneidungsteile der Form voneinander entfernt wurden, in ihre inaktive Position zurückgeführt werden.

21. Verfahren nach Anspruch 20, **dadurch gekennzeichnet, daß** der Gegenstand (10) aus einer Thermoplastscheibe (201) thermogeformt wird und daß vor dem Thermoformen des Gegenstandes der Umfang der Scheibe mit Hilfe der Halteorgane (223A, 223B, 223C) geformt wird.
